# EUROPÄISCHE PATENTSCHRIFT

(11) **EP 3 222 380 B1**
(45) Veröffentlichungstag und Bekanntmachung des Hinweises auf die Patenterteilung: **28.04.2021**
(21) Anmeldenummer: 17161505.7
(22) Anmeldetag: 17.03.2017
(51) Int. Cl.: B23K 1/005, B23K 26/064, B23K 26/06, B23K 26/073, B23K 26/08, B23K 26/10

(54) **STRAHLAUFTEILUNG ZUR LASERBEARBEITUNG**
BEAM SEPARATION FOR LASER PROCESSING
RÉPARTITION DE RAYONNEMENT POUR L'USINAGE AU LASER

(30) Priorität: 21.03.2016 DE 102016105214
(43) Veröffentlichungstag der Anmeldung: 27.09.2017
(73) Patentinhaber: TRUMPF Laser- und Systemtechnik GmbH, 71254 Ditzingen (DE)
(72) Erfinder: Broghammer, Gerhard, 78662 Bösingen (DE); Zimer, Hagen, 78655 Dunningen-Seedorf (DE); Tillkorn, Christoph, 78667 Villingendorf (DE); Rominger, Volker, 71711 Steinheim an der Murr (DE); Flamm, Daniel, 70469 Stuttgart (DE); Koitzsch, Matthias, 91052 Erlangen (DE); Gürtler, Yvonne, 71229 Leonberg (DE); Berger, Moritz, 71254 Ditzingen (DE); Kilian, Arwed, 14974 Ludwigsfelde (DE)
(74) Vertreter: Grättinger Möhring von Poschinger Patentanwälte Partnerschaft mbB

(56) Entgegenhaltungen:
- CN-A- 103 934 577
- JP-A- S62 263 862
- JP-A- 2003 311 452
- US-A1- 2014 104 686

## Beschreibung

Die vorliegende Erfindung betrifft eine Laserbearbeitungsanlage, insbesondere zum Löten und Schweißen von Werkstücken, sowie ein optisches System zur Strahlteilung eines Laserstrahls und ein diffraktives optisches Strahlformungselement. Ferner betrifft die Erfindung ein Verfahren zum Bereitstellen eines Laserstrahls für die Materialbearbeitung.

Aus dem Stand der Technik sind Strahlführungssysteme bekannt, die für eine laserstrahlbasierte Bearbeitung eines Werkstücks, insbesondere für Lötvorgängen wie dem des Lötens feuerverzinkter Bleche, eine günstige Strahlkonfiguration bereitstellen. Löten als ein beispielsweise spritzerbehafteter Prozess kann eine unruhige Nahtoberfläche und ausgefranste Nahtübergänge generieren, die an bestimmten Stellen wie im Außenhautbereich oder in Sichtbereichen wie z.B. der Heckklappe und dem Dach eines PKWs nicht erwünscht sind.

Derartige Strahlkonfigurationen umfassen beispielsweise drei mit separaten Fasern geführte Laserstrahlen, die auf ein zu bearbeitendes Blech nebeneinander projiziert werden. Des Weiteren offenbaren DE 102009045400 B3 und DE 102013214957 A1 eine Löt- oder Schweißoptik mit einer Drahtzufuhr und einer Schwenkachse. Im schwenkbaren Teil ist eine Strahlformung vorgesehen, welche den Strahl beispielsweise zum Vorreinigen und zum Fügen teilen und auslenken kann.

Ferner ist die Verwendung von Strahlteilern bei der Materialbearbeitung mit Laserstrahlung z.B. aus DE 10 2014 203 525 A1, US 5,922,224, US 2008/0113493 A1, US 2012/0104284 A1, US 2005/0115938 A1 bekannt. Dabei kann die Strahlablenkung mit unterschiedlichen parallelen Gitterstrukturen für die verschiedenen aufgeteilten Strahlanteile erfolgen, wobei keine weitere optische Einflussnahme vorgenommen wird.

Ferner offenbart US 2014/104686 A1 (Basis für den Oberbegriff der Ansprüche 1 und 13) einen diffraktiven Strahlaufteiler, der es erlaubt, einen Laserstrahl in mehrere Richtungen, die von der Ausbreitungsrichtung des einfallenden Laserstrahls abweichen, aufzuteilen. Die aufgeteilten Strahlen sind in ihrer Größe gleich und interferieren auf einer zu bearbeitenden Struktur unter Ausbildung eines Gitter-Musters, das auf die Geometrie der Strahlaufteilung zurückgeht.

JP S62 263862 A offenbart ein System zum gleichzeitigen Bearbeiten (z. B. Löten) mehrerer Punkte einer elektronischen Komponente. Dazu wird ein (aufgeweiteter) Laserstrahl auf ein Hologramm gerichtet, das zusammen mit weiteren Hologrammen auf einem drehbar gelagerten Träger angeordnet ist. Das Hologramm teilt den Laserstrahl in mehrere Strahlen auf, die zugleich auf entsprechende Punkte fokussiert werden.

CN 103 934 577 A offenbart ein Streulicht-freies Laserbearbeitungssystem mit einer einstellbaren Schnittbreite. Das streulichtfreie Laserbearbeitungssystem umfasst u. a. ein eindimensionales diffraktives optisches Element und eine Blende. Das optische Element erzeugt primäre und sekundäre Sub-Laserstrahlen, von denen die sekundären Sub-Laserstrahlen mit der Blende abgeschirmt werden.

JP 2003 311452 A offenbart einen Bearbeitungskopf zur Verbesserung der Festigkeit einer Bearbeitungszone. Der Bearbeitungskopf weist eine Laserstrahltrenneinrichtung auf, die aus einer Kollimationslinse, einem Strahlteiler, Biegungsspiegeln und einer Kondensorlinse besteht. Ein Strahl wird durch den Strahlteiler geteilt, um parallele Strahlen mit der Kondensorlinse zu fokussieren, wodurch nach einem Kreuzen im Brennpunkt separaten Laserstrahlen auf zu verschweißende Metallplatten treffen.

Einem Aspekt dieser Offenbarung liegt die Aufgabe zugrunde, zwei oder mehrere Intensitätszonen für die Laserbearbeitung bereitzustellen. Dies soll insbesondere auch einen Wechsel von Laserstrahlparametern erlauben, bei dem insbesondere die relative Anordnung der Intensitätszonen und die relative Größen in etwa erhalten werden.

Zumindest eine dieser Aufgaben wird gelöst durch ein optisches System zur Strahlteilung eines Laserstrahls nach Anspruch 6, ein diffraktives optisches Strahlformungselement nach Anspruch 1, eine Laserbearbeitungsanlage nach Anspruch 12 und durch ein Verfahren zum Bereitstellen von Intensitätszonen nach Anspruch 13. Weiterbildungen sind in den Unteransprüchen angegeben.

In einem Aspekt ist ein optisches System zur Strahlteilung eines Laserstrahls für die Bereitstellung einer Primärintensitätszone und mindestens einer Sekundärintensitätszone zur Werkstückbearbeitung ausgebildet. Es umfasst ein Strahlformungselement, das dazu ausgebildet ist, dem Laserstrahl einen strahlformenden Phasenverlauf über ein transversales Eingangsintensitätsprofil aufzuprägen, wobei der Phasenverlauf einen Primärstrahldiffusor, der in der Laserstrahlausbreitungsrichtung den Laserstrahl diffus verbreitert, und mindestens einen Sekundärstrahlerzeuger, insbesondere einen Sekundärstrahldiffusor, der mindestens einen Sekundärstrahl aus dem Laserstrahl (insbesondere diffus) teilt, insbesondere aus dem Laserstrahl beugt, ausbildet. Das optische System umfasst ferner eine Nahfeldoptik, die zur Fokussierung des Laserstrahls in einer Fokuszone unter Ausbildung der Primärintensitätszone und der mindestens einen Sekundärintensitätszone strahlabwärts des Strahlformungselements angeordnet ist. In einem weiteren Aspekt umfasst ein diffraktives optisches Strahlformungselement, das insbesondere zur Verwendung in einem wie hierin offenbarten optischen Systemausgebildet ist, wobei das diffraktive optische Strahlformungselement zur Aufprägung eines Phasenverlaufs auf einen zur Laserbearbeitung eines Werkstücks vorgesehenen Laserstrahl ausgebildet ist, eine flächig ausgebildete Phasenmaske. Die flächig ausgebildete Phasenmaske weist einen Primärstrahlbereich mit einem Primärstrahldiffusor-Phasenverlauf und mindestens einen Sekundärstrahlbereich mit über den Primärstrahlbereich verteilten, einen Sekundärstrahldiffusor-Phasenverlauf ausbildenden Zonen auf. Der Primärstrahldiffusor-Phasenverlauf bewirkt eine Strahldiffusion in Ausbreitungsrichtung eines Laserstrahls und der Sekundärstrahldiffusor-Phasenverlauf weist einen beugungsgitterartigen Phasenverlauf zum Beugen eines Strahlanteils aus dem Laserstrahl auf, der durch die Verteilung und/oder Ausrichtung der Zonen eine Strahldiffusion entlang einer entsprechenden Sekundärstrahlrichtung bewirkt.

In einem weiteren Aspekt ist eine Laserbearbeitungsanlage für die Bearbeitung von Werkstücken mit einem Laserstrahl offenbart, die eine Laserstrahlquelle, ein wie zuvor beschriebenes optisches System, insbesondere mit einem wie hierin offenbarten diffraktiven optischen Strahlformungselement auf. Ferner umfasst die Laserbearbeitungsanlage eine Werkstückhalterung insbesondere zum Halten von zu verlötenden Bauteilen.

In einem weiteren Aspekt umfasst ein Verfahren zum Bereitstellen von Intensitätszonen zur laserbasierten Werkstückbearbeitung durch Modifizieren des Phasenverlaufs eines Laserstrahl die folgenden Schritte: Aufprägen eines Primärphasenverlaufs über ein transversales Intensitätsprofil des Laserstrahls, wobei der Primärphasenverlauf derart ist, dass der Laserstrahl einen, sich insbesondere entlang einer im Fall ohne Modifizieren des Phasenverlaufs vorliegenden optischen Achse des Laserstrahls ausbreitenden, diffusen Primärstrahl ausbildet, und Aufprägen eines Sekundärphasenverlaufs über das transversale Intensitätsprofil des Laserstrahls, wobei der Sekundärphasenverlauf über den Bereich des Primärphasenverlaufs in Zonen verteilt ist und derart ausgebildet ist, dass ein Sekundärteil des Laserstrahls entlang einer Beugungsrichtung diffuse abgelenkt wird.

Die hierein beschriebenen Konzepte betreffen insbesondere die Bearbeitung von Bauteilen, bei denen die Bearbeitung optisch vor- und/oder nachbereitet werden soll, wie z.B. beim Vorreinigen und Fügen beim laserbasierten Löten.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Laserbearbeitungsanlage,
- Fig. 2: eine schematische Darstellung eines DOE-basierten optischen Systems zur Strahlaufteilung eines Laserstrahls,
- Fig. 3: ein Array von aneinander angrenzende Phasenzellen,
- Fig. 4A: eine beispielhafte Phasenzelle eines DOEs mit einer Zufallsphasenverteilung zur Ausbildung eines diffusen Primärstrahls und mit Phasengitterabschnitten zum diffusen Beugen eines Strahlanteils aus dem Laserstrahl zur Ausbildung von zwei Sekundärstrahlen,
- Fig. 4B: eine simulierte Amplitudenverteilung unter Verwendung eines Arrays von Phasenzellen der Fig. 4A,
- Fig. 5A: eine weitere beispielhafte Phasenzelle mit einer Fresnel-Linsen-artigen Phasenverteilung zur Primärstrahlausbildung und Phasengitterabschnitten zur Sekundärstrahlausbildung und
- Fig. 5B: eine simulierte Amplitudenverteilung unter Verwendung eines Arrays von Phasenzellen der Fig. 5A.

Hierin beschriebene Aspekte basieren zum Teil auf der Erkenntnis, dass Laserbearbeitungsvorgänge, beispielsweise Lötanwendungen von einer Spotformung mittels geeigneter optischer Elemente profitieren können, bei der z.B. mehrere Spots auf einem Werkstück/Blech generiert werden. Dies kann es ermöglichen, z.B. den Lötprozess erheblich ruhiger zu gestalten. So wurde erkannt, dass dabei nahezu keine Spritzer mehr auftreten können, wodurch Nahtkanten und Oberflächen wesentlich glatter ausgebildet werden.

Allgemein basieren die beschriebenen Aspekte somit zum Teil auf der Erkenntnis, dass eine Aufteilung eines Laserstrahls zur Bearbeitung nahe des Werkstücks ein Vor- und/oder Nachbearbeiten eines primären Arbeitsgangs mit nur einem zugeführten Laserstrahl erlauben kann.

Die vorgeschlagenen optischen Systeme erlauben es, ein erforderliches Spotformungselement nach der Drehachse einer Strahlführungsoptik, die beispielsweise eine (z.B. taktile) Nahtführungseinheit aufweist, einzubauen. Somit kann die geformte Spotkonfiguration z.B. ortsfest zum Lötdraht positioniert werden, d.h. die Lage des/der Spots zum Draht kann während des Laserbearbeitungsvorgangs unverändert bleiben.

Hierin beschriebene Aspekte basieren ferner zum Teil auf der Erkenntnis, dass eine Aufteilung in diffuse Strahlanteile die Verwendung eines optischen Systems bei unterschiedlichen Strahlquellen (Strahlparametern) erlauben kann. So wurde erkannt, dass insbesondere auf einem oder mehreren diffraktiven optischen Element (DOE) basierende optische Systeme eine Erzeugung von Intensitätszonen basierend auf diffus gebeugten Strahlanteilen zusammen mit einer Erzeugung eines diffus transmittierten Primärstrahls erlauben.

Allgemein wurde ferner erkannt, dass durch refraktive oder diffraktive optische Elemente eine Spotformung realisiert werden kann, die für den jeweiligen Prozess die jeweilige Laserbearbeitungsanlage anpasst. Beispielsweise können dieses Element nach einer Dreh- und/oder Schwenkachse eines Bearbeitungskopfs eingebaut werden. Eine Ablenkwirkung kann beispielsweise durch ein Aufprägen höherer Raumwinkel durch eine Gitterstruktur bewirkt werden. Ferner kann die Verbreiterung z.B. eines zentralen Spots durch ein diffraktives Fresnel-Linsen-Design, das z.B. als Linsenarray wirkt, vorgenommen werden. Bei gegebener Symmetrie, z.B. ein primärer kreisrunder auf der optischen Achse liegender Spot, ist ein derartiges Linsenarray effektive. Für kompliziertere Geometrien kann es in Kombination mit z.B. einem statistischen Gitter oder es kann nur ein statistisches Gitter verwendet werden.

Hierin beschriebene Aspekte basieren zum Teil ferner auf der Erkenntnis, dass durch eine gezielte Strahlformung, beispielsweise mit einem DOE, die Intensitätsverteilung um Reinigungsbereiche, die z.B. einem Lötbereich vorauseilen, ergänzt werden kann, wobei der Einsatz des DOE insbesondere für die Verwendung in vorgegebenen Wellenlängenbereichen ausgelegt werden kann.

Hierin beschriebene Aspekte basieren zum Teil ferner auf der Erkenntnis, dass für ein DOE mehrere Phasenverlaufarten im Phasenverlauf einer Phasenmaske vorgesehen werden können, die beispielsweise in entsprechenden Segmenten angeordnet sind. So können durch den Einsatz eines DOE zusätzliche Phasenverläufe auf einen Laserstrahl aufgeprägt werden, die beispielsweise den Aufbau eines zugrunde liegenden optischen Systems und/oder die Isolation eines Nutzstrahlanteils vereinfachen.

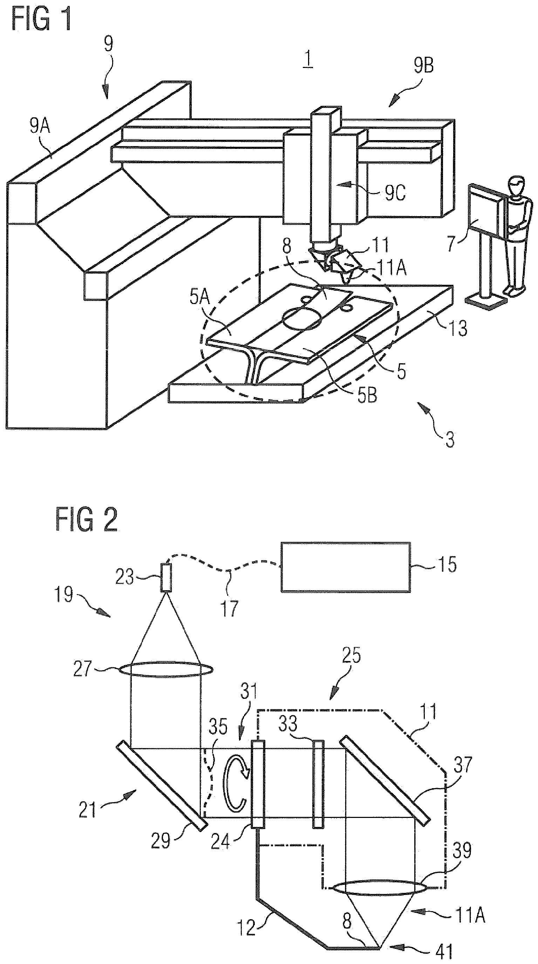

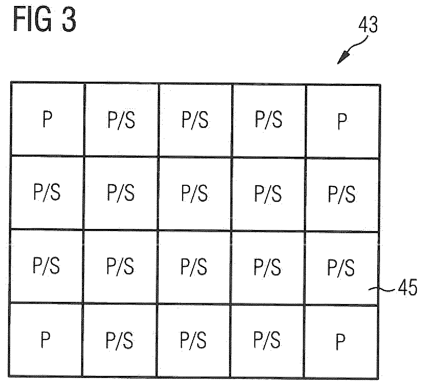

Im Folgenden wird in Verbindung mit Fig. 1 eine beispielhafte Laserbearbeitungsanlage beschrieben, bei der die hierein offenbarten Konzepte zum Bereitstellen von mehreren Intensitätszonen zur Laserbearbeitung umgesetzt werden können. Anschließend wird unter Bezugnahme auf die schematischen Darstellung der Figuren 2 (optisches System) und den beispielhaften Darstellungen von einem Array von Phasenzellen, Phasenzellen und Amplitudenverteilungen in den Figuren 3 bis 5B Umsetzungsmöglichkeiten beispielhaft mittels diffraktiver optischer Elemente (DOE) erläutert.

In Fig. 1 ist eine Werkzeugmaschine 1 mit einer Laserbearbeitungsanlage 3 als Grundmaschine für die Bearbeitung eines Werkstücks 5 dargestellt. Die Bedienung der Werkzeugmaschine 1 erfolgt über ein Bedienpult 7 mit einem Steuerungssystem (nicht explizit dargestellt). Beispielsweise können über die Erstellung und die Einstellung von NC-Programmen am Bedienpult 7 spezifische auf Werkstücke und deren Bearbeitung abgestimmte Arbeitsabläufe vorgenommen werden.

Ein nicht explizit in Fig. 1 gezeigtes Lasergerät der Laserbearbeitungsanlage 3 dient der Erzeugung von Laserstrahlung und kann beispielsweise auf einem Festkörperlaser wie einem

Scheibenlaser oder Faserlaser oder einem Gas-Laser wie einem CO2-Laser basieren. Über Laserlichtkabel und/oder Spiegel kann die Strahlführung vom Lasergerät zum Werkstück erfolgen.

Weitere Komponenten der Werkzeugmaschine 1 umfassen beispielsweise eine Lötdrahtzuführungseinheit (siehe Fig. 2) und eine (z.B. taktile) Nahtführungseinheit (nicht gezeigt), die im Bereich des Strahlaustritts einen Lötdraht im Laserfokus zum Zusammenfügen von Werkstückteilen entlang einer Nahtlinie bereitstellen. Fig. 1 zeigt beispielhaft vergrößert zwei zu verlötende Werkstückteile 5A, 5B, zwischen denen ein Lötdraht 8 geführt und eingelötet wird.

Ein durch ein Steuerungssystem kontrollierter Arbeitsablauf erlaubt die Bearbeitung des Werkstücks 5 auf eine vorbestimmte Art und Weise unter Zusammenwirken der verschiedensten Komponenten der Laserbearbeitungsanlage 3. So kann beispielsweise bei einem Lötvorgang der zugeführter Lötdraht 8 entsprechend dem Verlauf einer Lötlinie mithilfe der Nahtführungseinheit ausgerichtet werden.

Den Weg des Lasers kann das Steuerungssystem automatisch oder unter Einflussnahme des Bedieners berechnen und ansteuern. Damit beispielsweise die Lötqualität stimmt, kann eine Vor- und/oder Nachbearbeitung im Bereich und entlang der Lötnaht erfolgen. Dazu kann die Steuerung die passenden Werte für Bearbeitungsparameter wie Lötgeschwindigkeit, Laserleistung, Laserwellenlänge etc. einstellen.

Fig. 1 zeigt ferner schematisch den Aufbau der Laserbearbeitungsanlage 3, welche sich beispielsweise im Innenraum einer Schutzkabine befindet. Die Laserbearbeitungsanlage 3 weist eine Bewegungseinheit 9 mit funktionsrelevanten Bauteilen wie X-, Y- und Z- Schlitten 9A, 9B, 9C zur Bewegung von Strahlführungs- und Medienzuführungskomponenten relativ zum Werkstück 5 auf.

Allgemein können die Strahlführungskomponenten Laserlichtkabel, eine Z-Pinole, eine Kollimationsoptik und eine Bearbeitungsoptik zum Leiten und Fokussieren des Laserstrahls auf das Werkstück 5 umfassen. Die Bearbeitungsoptik ist üblicherweise z.T. in einem Bearbeitungskopf 11 mit einer Lötdrahtzuführungseinheit (siehe Fig. 2) und evtl. Gasauslassdüsen vorgesehen. In der beispielhaft dargestellten Ausführungsform kann der Bearbeitungskopf 11, beispielsweise durch weitere Dreh- und Schwenkachsen, im Wesentlichen frei im Raum positioniert und ausgerichtet werden. Ergänzend oder alternative kann dies über Bewegungsfreiheitsgrade einer Werkstückhalterung erfolgen. So kann der austretende Laserstrahl gezielt über das Werkstück 5 geführt werden, insbesondere unter Zufuhr des Lötdrahts entlang der Lötnaht während eines Lötvorgangs. Weitere, insbesondere redundante, Achsen können ein schnelles Einstellen der Position und Ausrichtung des Bearbeitungskopfes 11 zum Werkstück 5 verbessern. Wird so z.B. der Laserstrahl/der Bearbeitungskopf 11 und das Werkstück 5 relativ zueinander bewegt, kann auf einer Bearbeitungsbahn ein durchgängige Lötung erzeugt werden kann.

Wie nachfolgend erläutert kann in beispielhaften Lötvorgängen beim Löten mit dem Laserstrahl ein Randbereich der Lötzone des Werkstücks 5 vor- oder nachbearbeitet werden. Dazu wird der Laserstrahl aufgeteilt, um mehrere Intensitätszonen am Werkstück 5 bereitzustellen. In Fig. 1 ist schematisch zur Verdeutlichung eine große Primärintensitätszone zum Löten auf dem Lötdraht gezeigt, der links und rechts zwei kleinere Sekundärintensitätszonen z.B. zu Reinigungszwecken vorauslaufen.

Das Werkstück 5 kann mit einer Spanntechnik (nicht gezeigt) ortsfest auf einer Werkstücklagerungsvorrichtung 13 (in Fig. 1 beispielhaft als Tisch dargestellt) gelagert sein. In alternativen Ausführungsformen ist auch das Werkstück 5/die Werkstücklagerungsvorrichtung 13 oder nur das Werkstück 5/die Werkstücklagerungsvorrichtung 13 im Raum bewegbar. Die hierein vorgenommenen Konzepte sind entsprechend angepasst auch in derartigen Konfigurationen einsetzbar.

Das Werkstück 5 ist beispielsweise ein warmumgeformtes Strukturteil für ein Kraftfahrzeug, z.B. eine Heckklappe oder ein Dachelement. Ferner kann das Werkstück beispielsweise aus Plattenteilen ausgebildet sein, d.h. sich im Wesentlichen in einer Ebene erstrecken. Ebenso ist auch ein Rohr oder ein stangenförmiges Werkstück möglich. Typische Werkstücke sind aus einem Metall, wie z.B. Stahl, Aluminium oder Kupfer, oder einer Metalllegierung. Ebenso sind aber auch Funktionskeramiken, Kunststoffe, organische Werkstoffe oder andere Werkstoffe möglich.

Beim Löten muss der Abstand zwischen Strahlaustritt in einem Strahlausgangsbereich 11A und dem Werkstück 5 möglichst genau auf einen Arbeitsabstand eingestellt werden, damit der Fokus während des Bearbeitungsvorgangs möglichst durchgehend optimal bezüglich der Materialoberfläche positioniert ist und der Lötdraht optimal in den Lötspalt geführt werden kann. Da schon geringe Abweichungen im Abstand das Ergebnis beeinflussen können, kann der Arbeitsabstand durch eine aktive Sensorik für eine kontrollierte Nahtführung überwacht und kontinuierlich nachgeregelt werden.

Fig. 2 zeigt schematisch einen optischen Aufbau, wie er der Laserbearbeitungsanlage 3 der Fig. 1 zugrunde liegen könnte. Laserlicht einer Laserstrahlquelle 15 wird mit z.B. einem Lichtleitkabel 17 einer Laserlichteinkopplungseinheit einer Bearbeitungsoptik 19 zugeführt. Die Bearbeitungsoptik 19 umfasst allgemein z.B. eine Strahlführungseinheit 21 und den Bearbeitungskopf 11. Die Laserlichteinkopplungseinheit ist z.B. eine Lichtleitkabelaufnahmeeinheit 23, an der ein oder mehrere Lichtleitkabel, beispielsweise das Lichtleitkabel 17, befestigbar bzw. befestigt sind. Bei mehreren Laserstrahlquellen/Lichtleitkabeln kann jeweils Licht einer zugehörigen Laserstrahlquelle zugeführt werden, das spezifische Strahlparameter aufweist. Der Bearbeitungskopf 11 ist beispielsweise an der Strahlführungseinheit 21 mit einer Rotationseinheit 24 drehbar montiert, so dass eine Ausrichtung des austretenden Laserstrahls (siehe Strahlausgangsbereich 11A in Fig. 1) um eine Drehachse erfolgen kann. Die Drehbarkeit ist beispielhaft mit einem Pfeil angedeutet.

Beispielhafte Laserstrahlquellen umfassen Scheibenlaser (mit einer Emission bei z.B. 1030 nm) oder Diodenlaser (mit einer Emission bei z.B. 938 nm, 968 nm und 989 nm). Mit Blick auf die nachfolgend erläuterten DOE-basierten Konzepte sind die Wellenlängenunterschiede im Wesentlichen vernachlässigbar klein (z.B. im Bereich von 5 %), so dass Phasenmasken bei mehreren Wellenlängen mit im Wesentlichen gleichen Effekten eingesetzt werden können.

Ferner ist der optische Aufbau der Bearbeitungsoptik 19, und insbesondere ein optisches System 25 des Bearbeitungskopfes 11, derart konzipiert, dass verschiedene Strahlqualitäten verwendet werden können. Die Strahlqualität ist beispielsweise durch den Durchmesser des verwendeten Lichtleitkabels 17 bedingt. Beispielsweise ist der optische Aufbau, insbesondere das optische System 25, für Lichtleitkabel mit unterschiedlichen Durchmessern ausgelegt. In einigen Ausführungsformen kann die Bearbeitungsoptik 19, und insbesondere das optische System 25, z.B. für Lichtleitkabeldurchmesser von 600 µm bis 100 µm ausgelegt werden.

Der Bearbeitungsoptik 19, und insbesondere dem optischen System 25, kann üblicherweise eine (primäre) optische Achse zugeordnet werden, die beispielsweise durch Symmetriepunkte von Linsen verläuft und entlang der ein Laserstrahl im Fall, dass kein Modifizieren des Phasenverlaufs vorliegt, verlaufen würde.

Mit den hierin offenbarten Diffusorkonzepten, z.B. basierend auf einem DOE, kann ein Umsortieren der Strahlanteile bei entsprechend unterschiedlichen Strahlparametern ermöglicht werden. Die Strahlqualität wird dabei bei zunehmenden Lichtleitkabeldurchmessern schlechter, wobei das Umsortieren für bessere Strahlqualitäten immer besser funktioniert. Entsprechend kann das Konzept beispielsweise auf ein 600 µm Lichtleitkabeldurchmesser ausgelegt werden, so dass dann ebenso eine ausreichende Aufteilung des Laserstrahls für Lichtleitkabeldurchmesser von 200 µm und/oder 100 µm gegeben ist.

Weiter bezugnehmend auf die beispielhafte Ausführungsform in Fig. 2 umfasst die Strahlführungseinheit 21 der Bearbeitungsoptik 19 eine Kollimationslinse 27 und einen Umlenkspiegel 29. Die Kollimationslinse 27 ist insbesondere zur Kollimation des aus dem in der Lichtleitkabelaufnahmeeinheit 23 positionierten Lichtleitkabels 17 austretenden Lichts angeordnet. Beispielsweise wird nach dem Umlenkspiegel 29 ein insbesondere kollimierter Strahlabschnitt 31 bereitgestellt, der sich entlang der Drehachse der Rotationseinheit 24 zum Bearbeitungskopf 11, und insbesondere zu einem Strahlformungselement 33 des Bearbeitungskopfs 11, hin erstreckt. Im Strahlabschnitt 31 weist der Laserstrahl ein transversales Eingangsintensitätsprofil 35 auf, beispielsweise ein Gauß-förmiges Intensitätsprofil, das somit auf das Strahlformungselement 33 trifft.

Der Bearbeitungskopf 11 umfasst zusätzlich zum Strahlformungselement 33 einen Umlenkspiegel 37 und eine Fokussierlinse 39. Die Fokussierlinse 39 bildet z.B. zusammen mit der Kollimationslinse 27 einen Teleskopaufbau, der den Ausgang des Lichtleitkabels auf eine Fokuszone 41 im Strahlausgangsbereich 11A abbildet. Allgemein können so Leistungsanteile, die z.B. aufgrund nicht perfekter Auslegung des Strahlformungselements 33 auf eine gerade eingekoppelte Laserwellenlänge dieses unmoduliert passieren, von der Fokussierlinse 39 in den zentralen Bereich der Fokuszone 41, und damit z.B. in den primären Intensitätsbereichs des Lötspots, fokussiert werden. Die mit dem Bearbeitungskopf 11 mitdrehend angeordnete Löhtdrahtzuführungseinheit 12 stellt für einen Lötvorgang den Lötdraht 8 in der Fokuszone 41 bereit.

Gemäß den nachfolgend beispielhaft erläuterten Strahlteilungskonzepten kann in einigen Ausführungsformen das Strahlformungselement 33 derart ausgebildet sein, dass auch das Eingangsintensitätsprofil 35 beeinflusst wird, so dass z.B. im Fokus der nachfolgend erläuterten Primär- und/oder Sekundärstrahlen ein Top-Hat-Profil vorliegt, wobei andere Profile allgemein ausbildbar wären. So wird z.B. eine homogene Leistungsverteilung im Lötspot und/oder den Reinigungsspots möglich.

Das Strahlformungselement 33 ist beispielsweise als diffraktives optisches Element (DOE) ausgebildet. Insbesondere ist es dazu ausgebildet, eine Leistungsverteilung in der Fokuszone 41 bereitzustellen, die in einen Anteil zum z.B. Reinigen/Entzinken und einen Anteil zum z.B. Löten aufgeteilt ist.

Das Strahlformungselement 33 ist allgemein dazu ausgebildet ist, dem Laserstrahl einen strahlformenden Phasenverlauf über sein transversales Eingangsintensitätsprofil 35 aufzuprägen. Der Phasenverlauf bildet einen Primärstrahldiffusor, der in der Laserstrahlausbreitungsrichtung den Laserstrahl diffus verbreitert, und mindestens einen beispielsweise Sekundärstrahldiffusor, der mindestens einen Sekundärstrahl aus dem Primärstrahl diffus beugt, aus.

Im Fall eines DOE erfolgt die Phasenaufprägung mit einer flächig ausgebildeten Phasenmaske, die einen Primärstrahlbereich mit einem Primärstrahldiffusor-Phasenverlauf und mindestens einen Sekundärstrahlbereich mit über den Primärstrahlbereich verteilten, einen Sekundärstrahldiffusor-Phasenverlauf ausbildende Zonen aufweist. Der Primärstrahldiffusor-Phasenverlauf bewirkt eine Strahldiffusion in Ausbreitungsrichtung des Laserstrahls, wobei der Sekundärstrahldiffusor-Phasenverlauf einen beugungsgitterartigen Phasenverlauf zum "Heraus"-Beugen eines Strahlanteils aus dem Laserstrahl aufweist. Der Sekundärstrahldiffusor-Phasenverlauf kann insbesondere durch die Verteilung der Zonen und leichte Variationen der Ausrichtung des beugungsgitterartigen Phasenverlaufs eine Strahldiffusion in Beugungsrichtung bewirken. Ohne Strahldiffusion in Beugungsrichtung fungiert der Sekundärstrahldiffusor-Phasenverlauf entsprechend als Sekundärstrahlerzeuger.

Wie in Fig. 3 gezeigt kann eine Phasenmaske 43 eines DOE beispielsweise durch ein Array von aneinander angrenzenden Phasenzellen 45 mit identischen oder in Gruppen identischen vorliegenden Phasenverläufen ausgebildet sein. Hierin wird das strukturelle, die Phasenaufprägung bewirkende und flächig ausgebildete Element eines diffraktiven optischen Strahlformungselements, sei es ein einstellbarer SLM oder ein fest eingeschriebenes DOE, als Phasenmaske bezeichnet. Je nach Ausführung des DOE kann es in Transmission oder in Reflexion verwendet werden, um einem Laserstrahl einen Phasenverlauf aufzuprägen. Für die hierin offenbarten Konzepte weist mindestens eine Mehrzahl der Phasenzellen 45 einen Primärstrahlbereich und eine oder mehrere über den Primärstrahlbereich verteilte Zonen des Sekundärstrahldiffusor-Phasenverlauf auf. In Fig. 3 sind diese mit P/S gekennzeichnet. In einigen Phasenarrays können einzelne Phasenzellen 45 nur als Primär- oder Sekundärstrahlbereich ausgebildet sein. In Fig. 3 sind die Phasenzellen der Ecken beispielhaft als reine Primärphasenzellen mit P gekennzeichnet.

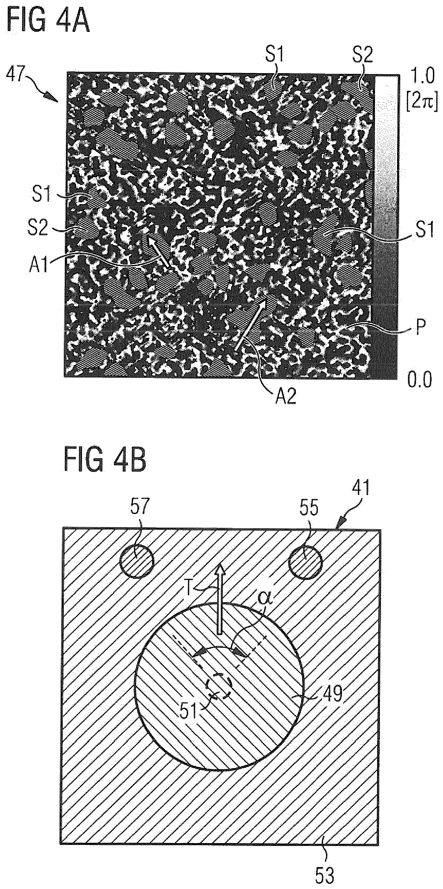

Fig. 4A zeigt eine Phasenzelle 47, die als Beispiel für einen Primärstrahldiffusor-Phasenverlauf in einem Primärstrahlbereich P eine Zufallsverteilung der Phase aufweist. Läge ein derartiger Phasenverlauf homogen über alle Phasenzellen einer Phasenmaske vor, würde der Laserstrahl in der Fokuszone 41 zu einer diffus vergrößerten Intensitätszone führen. Aufgrund der nachfolgend erläuterten Sekundärstrahlerzeugung reduziert sich der Leistungsanteil in dieser diffus vergrößerten Primärintensitätszone in der Fokusebene 4, da dem einen oder mehreren Sekundärintensitätszonen ein entsprechender Leistungsanteil abgegeben wird.

Dies ist in Fig. 4B durch eine Primärintensitätszone 49 verdeutlicht. Zum Vergleich ist in Fig. 4B die nicht diffus verbreiterte Abbildung des Faserdurchmessers durch einen zentralen gestrichelte Kreis 51 in der Mitte der Primärintensitätszone 49 dargestellt. Aufgrund der Diffusor-Eigenschaften der Zufallsverteilung ist die Primärintensitätszone 49 deutlich vergrößert, z.B. von 600 µm auf 3 mm.

Die Primärintensitätszone ist in der Fokusebene 41 von einer im Wesentlichen intensitätsfreien Umgebung 53 umgeben.

In Fig. 4A erkennt man in der Phasenzelle 47 eine Mehrzahl von Phasengitterabschnitten S1 und S2, die den Sekundärstrahldiffusor-Phasenverlauf in Form von linearen Phasengitterabschnitten, insbesondere in Form von Blazegitterabschnitten, darstellen. Die Ausrichtung der Phasengitterabschnitte ist im Wesentlichen in zwei Gruppen unterteilt. Eine erste Gruppe (Phasengitterabschnitte S1) weist lineare Phasenverläufe auf, die im Wesentlichen orthogonal zu einem Pfeil A1 verlaufen, wogegen eine zweite Gruppe (Phasengitterabschnitte S2) lineare Phasenverläufe aufweist, die im Wesentlichen orthogonal zu einem Pfeil A2 verlaufen. Die Beugungsgitterstrukturen bewirken, dass ein Teil des Laserstrahls aus dem Primärstrahl herausgebeugt wird, und zwar in zwei Richtungen die durch die Pfeile A1 und A2 angedeutet sind.

Entsprechend erkennt man in Fig. 4B zwei Sekundärintensitätszonen 55, 57, die außerhalb der Primärintensitätszone 49 angeordnet sind. In der beispielhaften Fokuszone 41 der Fig. 4B sind die Sekundärintensitätszonen 55, 57 bezüglich einer Translationsrichtung T derart weit aus dem Zentrum weggebeugt, dass sie die Randbereiche der Primärintensitätszone 49 (orthogonal zur Translationsrichtung T) säubern. Entsprechend verlaufen die beiden Sekundärstrahldiffusor-Phasenverläufe S1, S2 in Fig. 4A unter einem Winkel zueinander, der z.B. so gewählt wird, dass zusammen mit dem Versatz der Sekundärintensitätszonen 55, 57 die Randbereiche auf beiden Seiten der Primärintensitätszone 49 bestrahlt werden. Beispielsweise ist der Winkel α kleiner 90° um einen gewissen Vorlaufabstand der Reinigungsspots (Verzögerungsabstand im Fall von Nachbearbeitungsspots) zu gewährleisten.

Ferner sind die Ausrichtungen der Sekundärstrahldiffusor-Phasenverläufe S1, S2 in Fig. 4A leicht von Abschnitt zu Abschnitt oder innerhalb eines Abschnitts variiert. Dies bewirkt, dass auch die Sekundärstrahlen diffus verbreitert werden. Beispielsweise ist einen Faktor von ca. "2" bzgl. des Faserdurchmessers (Kreis 51) in Fig. 4B angedeutet. Bei Gesamtlaserleistung von 6kW kann sich z.B. eine Leistungsdichte von 0,6 kW/mm² im zentralen Spot, sowie eine Leistungsdichte von 1,8 kW/mm² in den beiden Reinigungsspots eines Lötvorgangs ergeben

Phasenmasken mit Phasenzellen 47 gemäß Fig. 4A können eine Effizienz von größer 90 % bei der Strahlaufteilung aufweisen.

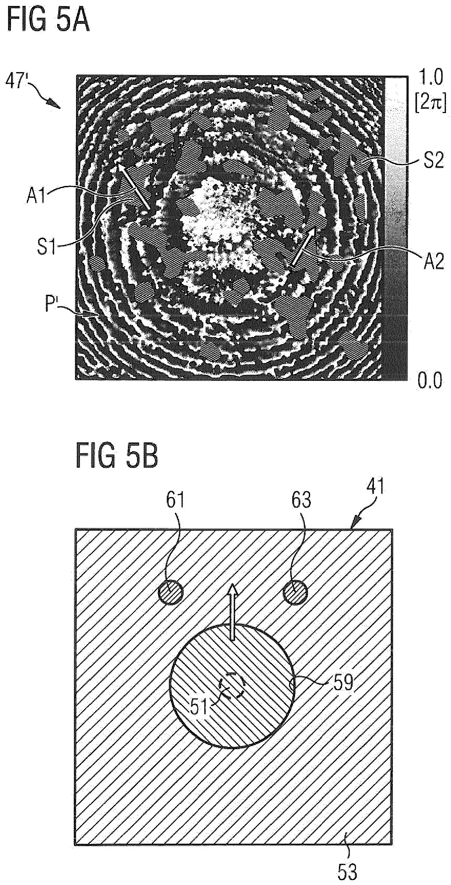

Möchte man die Effizienz erhöhen, kann wie in Fig. 5A beispielhaft gezeigt eine Phasenzelle 47' mit einem Primärstrahldiffusor-Phasenverlauf in einem Primärstrahlbereich P' eingesetzt werden. Die Phasenzelle 47' weist einen diffraktiven, insbesondere Fresnel-Linsen-artigen Phasenverlauf im Primärstrahlbereich P' auf der ein Umverteilen der Intensitäten in der Primärintensitätszone bewirkt. Man erkennt in Fig. 5A entsprechend ringartige Strukturen.

Mit einem derartigen Phasenverlauf kann beispielsweise ein Top-Hat-ähnlicher Intensitätsverlauf in einer Primärintensitätszone 59 (siehe Fig. 5B) bei einer Effizienz von z.B. größer 95 % erreicht werden. Dies erlaubt es beispielsweise eine homogener Ausleuchtung der Primärintensitätszone 59 bereitzustellen.

Zusätzlich kann man einen Fokussiereffekt integrieren, der z.B. die Größe der Primärintensitätszone 59 in Fig. 5B im Vergleich zur Primärintensitätszone 49 in Fig. 4B verkleinert.

Man erkennt in Fig. 5B ferner, dass auch die Diffusor-Wirkung der Phasengitterabschnitte S1, S2 reduziert wurde, um kleinere Sekundärintensitätszonen 61, 63 zu erzeugen.

In anderen Worten ist die Konfiguration des den Figuren 5A und 5B zugrundeliegenden Phasenverlaufs eine Mischung aus einem diffraktiven Linsenarray (Fresnel-linse) und einem statistischen Gitter. Das Linsenarray sorgt für die homogene Ausleuchtung des Lötspots, das Gitter bewirkt das Umsortieren von Leistungsanteilen weg von der optischen Achse, hinzu den Reinigungsbereichen. Der in Zusammenhang mit den Figuren 4A, 4B erläuterte reinstatistische Primärdiffusor kann allgemein etwas ineffizienter sein (ca. 5% weniger Effizienz).

Variiert man nun die Strahlqualität des Eingangslaserstrahls, z.B. durch Verwenden eines kleineren Faserdurchmessers, ergibt sich eine größere Ausleuchtung der Phasenmaske insbesondere bei gleichbleibender Faser-NA, wobei die Diffusor-Wirkungen bzgl. des Primärstrahlbereichs und des Sekundärstrahlbereichs für die Größen der Primärintensitätszone und der Sekundärintensitätszone bestimmend bleibt. Ein kleinerer Faserkern bei gleichbleibender Faser-NA resultiert in einer besseren Strahlqualität, wodurch wiederrum ein größerer Bereich des Diffusors beleuchtet werden kann. Werden genügend Zellen des Diffusors ausgeleuchtet, ist dessen Wirkung gesichert. Eine Verschlechterung der Strahlqualität kann hingegen nach der Kollimation zu einem immer kleiner werdenden Strahl führen, wobei die Diffusor-Wirkung mehr und mehr zurückgehen kann.

Das Strahlformungselement 33 kann ferner um eine Strahlachse des einfallenden Laserstrahls drehbar angeordnet sein, um insbesondere die Lage der mindestens einen Sekundärintensitätszone bezüglich der Primärintensitätszone in der Fokusebene 41 auszurichten. Überdies wurde erkannt, dass sich durch Ausrichten/Drehen des DOE innerhalb des optischen Systems die Laserbearbeitung an gewünschte Bearbeitungstrajektorien anpassen lassen kann.

Die in Zusammenhang mit Fig. 2 erläuterte Ausführungsform mit der der Rotationseinheit 24 nachfolgenden Anordnung des Strahlformungselements 33 (hinter der Drehebene) kann es erlauben, den Lötdraht und die Intensitätszonen ortsfest zueinander zu positionieren. Ferner kann beispielsweise das Strahlformungselements 33 oder der gesamte Bearbeitungskopf 11 austauschbar vorgesehen werden, um in der Intensitätszonenverteilungen variabel zu sein, beispielsweise um auf variierende Lötdrahtdicken (z.B. im Bereich von 0,1 mm bis 3 mm) eingehen zu können.

Die in Zusammenhang mit den Figuren 4A und 5A erläuterten Konzepte erlauben es z.B. für die Reinigung mindestens zwei voreilende Anteile jeweils an den Rändern des größeren Lötbereichs bereitzustellen. Die Aufteilung in einen Primärstrahl und zwei räumlich getrennte Sekundärstrahlen kann alternative durch z.B. ineinander übergehende U- oder V -förmige Intensitätszonen ersetzt werden. In diesen Fällen sind die von der normalen Ausbreitungsrichtung abweichenden Strahlanteile/Strahlschwerpunkte als Sekundärstrahlen zu verstehen.

In einigen Ausführungsformen können DOE-Strahlformungselemente ganz oder teilweise durch refraktive optische Elemente wie Linsenarrays ersetzt oder ergänzt werden.

Die Ausführungsformen der Figuren 4A und 5A können mit fest eingeschriebenen transmittierenden (alternative auch reflektiv möglich) Strahlformungselementen umgesetzt werden. Die Digitalisierung kann dabei die Verwendung von diskreten Werten für die Phasenschiebung und/oder die laterale Struktur (beispielsweise Pixelstruktur) betreffen. Die alternative Nutzung von räumlichen Lichtmodulatoren (SLMs) ist ferner eine von mehreren verschiedenen Möglichkeiten, die Strahlformung über programmierbare oder auch fest eingeschriebene diffraktive optische Elemente (DOE) umzusetzen.

Allgemein erlauben SLMs sehr feine Phasenänderungen bei einer lateral gröberen Auflösung, im Gegensatz zu beispielsweise lithographisch hergestellten, fest eingeschriebenen DOEs. Fest eingeschriebene DOEs weisen z.B. planparallele Stufen auf, deren Dicke die Phase bestimmt. Dabei erlaubt die lithographische Herstellung eine hohe laterale Auflösung. Binäre Stufen können reale und virtuelle Strahlprofile hervorrufen. Erst eine Anzahl von mehr als zwei Phasenhüben kann eine Differenzierung im Sinne einer Vorzugsrichtung hervorrufen. So können vier oder acht oder mehr Phasenhübe eine effiziente Strahlformung des Strahlprofils erlauben. Allerdings kann die Diskretisierung Nebenordnungen bewirken, die beispielsweise herausgefiltert werden können. Herstellungsverfahren für kontinuierliche Mikrostrukturen umfassen beispielsweise die Analog-Lithographie oder die Nanoimprint-Lithographie.

## Patentansprüche

1. Diffraktives optisches Strahlformungselement (33) insbesondere zur Verwendung in einem optischen System (25), wobei das diffraktive optische Strahlformungselement (33) zur Aufprägung eines Phasenverlaufs auf einen zur Laserbearbeitung eines Werkstücks (5) vorgesehenen Laserstrahl (31) ausgebildet ist, mit
einer flächig ausgebildeten Phasenmaske (43),
**dadurch gekennzeichnet, dass**
die flächig ausgebildeten Phasenmaske (43) einen Primärstrahlbereich (P, P') mit einem Primärstrahldiffusor-Phasenverlauf und mindestens einen Sekundärstrahlbereich mit über den Primärstrahlbereich (P, P') verteilten, einen Sekundärstrahlerzeuger-Phasenverlauf ausbildenden Zonen (S1, S2) aufweist,
wobei der Primärstrahldiffusor-Phasenverlauf eine Zufallsverteilung der Phase und/oder einen diffraktiven Phasenverlauf umfasst, wodurch eine Strahldiffusion in Ausbreitungsrichtung eines Laserstrahls (31) bewirkt wird, und
wobei der Sekundärstrahlerzeuger-Phasenverlauf einen beugungsgitterartigen Phasenverlauf zum Beugen eines Strahlanteils aus dem Laserstrahl (31) aufweist.

2. Diffraktives optisches Strahlformungselement (33) nach Anspruch 1, wobei der Primärstrahldiffusor-Phasenverlauf im Primärstrahlbereich (P, P')
einen diffraktiven Fresnel-Linsen-artigen Phasenverlauf umfasst und/oder zur Ausbildung eines Top Hat-Strahlprofils ausgebildet ist.

3. Diffraktives optisches Strahlformungselement (33) nach Anspruch 1 oder 2, wobei der der Sekundärstrahlerzeuger-Phasenverlauf durch die Verteilung und/oder Ausrichtung der Zonen (S1, S2) eine Strahldiffusion entlang einer entsprechenden Sekundärstrahlrichtung bewirkt und/oder
wobei die Ausrichtung des Sekundärstrahlerzeuger-Phasenverlaufs innerhalb einer Zone (S1, S2) oder zwischen Zonen (S1, S2) variiert.

4. Diffraktives optisches Strahlformungselement (33) nach einem der Ansprüche 1 bis 3, wobei der Sekundärstrahlerzeuger-Phasenverlauf lineare Phasengitterabschnitte, insbesondere Blazegitterabschnitte, aufweist und/oder
wobei mindestens zwei Sekundärstrahldiffusor-Phasenverläufe vorgesehen sind, deren Ablenkungsrichtungen unter einem Winkel (α), insbesondere unter einem Winkel kleiner 90°, zueinander verlaufen.

5. Diffraktives optisches Strahlformungselement (33) nach einem der Ansprüche 1 bis 4, wobei die Phasenmaske (43) aneinander angrenzenden Phasenzellen (45) mit identischen oder in Gruppen identischen Phasenverläufen aufweist und/oder
wobei mindestens eine Mehrzahl der Phasenzellen (45) einer Phasenmaske (43) einen Primärstrahlbereich (P, P') und über den Primärstrahlbereich verteilte Zonen (S1, S2) des Sekundärstrahlerzeuger-Phasenverlaufs aufweist und/oder
wobei das Strahlformungselement (33) als programmierbares oder fest eingeschriebenes diffraktives optisches Element ausgebildet ist.

6. Optisches System (25) zur Strahlteilung eines Laserstrahls (31) für die Bereitstellung einer Primärintensitätszone (49; 59) und mindestens einer Sekundärintensitätszone (55, 57; 61, 63) zur Werkstückbearbeitung mit
einem diffraktiven optischen Strahlformungselement (33) nach einem der Ansprüche 1 bis 5, das dazu ausgebildet ist, dem Laserstrahl (31) einen strahlformenden Phasenverlauf über ein transversales Eingangsintensitätsprofil (35) aufzuprägen,
einer Nahfeldoptik (39), die zur Fokussierung des Laserstrahls (31) in einer Fokuszone (41) unter Ausbildung der Primärintensitätszone (49; 59) und der mindestens einen Sekundärintensitätszone (55, 57; 61, 63) strahlabwärts des Strahlformungselements (33) angeordnet ist.

7. Optisches System (25) nach Anspruch 6, ferner mit
einer Laserlichteinkopplungseinheit, insbesondere einer Lichtleitkabelaufnahmeeinheit (23) und/oder
einer Kollimationslinse (27) zur Bereitstellen eines insbesondere kollimierten Strahlabschnitts mit dem auf das Strahlformungselement (33) treffenden transversalen Eingangsintensitätsprofil (35), wobei die Kollimationslinse (27) insbesondere zur Kollimation des aus einem in der Lichtleitkabelaufnahme (23) positionierten Lichtleitkabels (17) austretenden Lichts angeordnet ist.

8. Optisches System (25) nach Anspruch 6 oder 7, ferner mit
einer Löhtdrahtzuführungseinheit (12) zum Bereitstellen eines Lötdrahts (8) in der Primärintensitätszone (49; 59) und wobei die mindestens eine Sekundärintensitätszone (55, 57; 61, 63) insbesondere seitlich zur Verbindungslinie von der Lötdrahtendposition zur Primärintensitätszone (49; 59) und im Bereich oder außerhalb des Bereichs des Randbereichs der Primärintensitätszone (49; 59) angeordnet ist.

9. Optisches System (25) nach einem der Ansprüche 6 bis 8, wobei das Strahlformungselement (33) um eine Strahlachse des einfallenden Laserstrahls (31) drehbar angeordnet ist, um insbesondere die Lage der mindestens einen Sekundärintensitätszone (55, 57; 61, 63) bezüglich der Primärintensitätszone (49; 59) auszurichten.

10. Optisches System (25) nach einem der Ansprüche 6 bis 9, ferner mit
einer Bearbeitungskopfeinheit (11), die das Strahlformungselement (33), insbesondere einen Umlenkspiegel (37), die Fokussierlinse (39) und insbesondere die Lötdrahthaltevorrichtung (12) aufweist, und
einer Strahlzuführungseinheit (21), die insbesondere die Lichtleitkabelaufnahme (23) und die Kollimationslinse (27) umfasst,
wobei die Bearbeitungskopfeinheit (11) um eine im Wesentlichen entlang der optischen Achse verlaufenden Drehachse drehbar zur Strahlzuführungseinheit (21) angeordnet ist.

11. Optisches System (25) nach einem der Ansprüche 6 bis 10, wobei der Sekundärstrahlerzeuger als Sekundärstrahldiffusor ausgebildet ist, der eine Strahldiffusion in Beugungsrichtung bewirkt.

12. Laserbearbeitungsanlage (3) für die Bearbeitung von Werkstücken mit einem Laserstrahl (31) mit
einer Laserstrahlquelle (15),
einem optisches System (25) nach einem der Ansprüche 6 bis 11, und
einer Werkstückhalterung (13) insbesondere zum Halten von zu verlötenden Bauteilen (5A, 5B).

13. Verfahren zum Bereitstellen von Intensitätszonen (49, 55, 57; 59, 61, 63) zur laserbasierten Werkstückbearbeitung durch Modifizieren des Phasenverlaufs eines Laserstrahls (31), **gekennzeichnet durch** folgende Schritte:
Aufprägen eines Primärphasenverlaufs über ein transversales Intensitätsprofil (35) des Laserstrahls (31), wobei der Primärphasenverlauf eine Zufallsverteilung der Phase und/oder einen diffraktiven Phasenverlauf derart umfasst, dass der Laserstrahl (31) einen, sich insbesondere entlang einer im Fall ohne Modifizieren des Phasenverlaufs vorliegenden optischen Achse des Laserstrahls (31) ausbreitenden, diffusen Primärstrahl ausbildet, und
Aufprägen eines Sekundärphasenverlaufs über das transversale Intensitätsprofil (35) des Laserstrahls (31), wobei der Sekundärphasenverlauf über den Bereich des Primärphasenverlaufs in Zonen (S1, S2) verteilt ist und derart ausgebildet ist, dass ein Sekundäranteil des Laserstrahls (31) entlang einer Beugungsrichtung abgelenkt wird.

14. Verfahren nach Anspruch 13, wobei der Sekundäranteil des Laserstrahls (31) entlang einer Beugungsrichtung diffuse abgelenkt wird.

15. Verfahren nach Anspruch 13 oder 14, ferner mit den Schritten
Fokussieren des Primärstrahls und des Sekundärteils des Laserstrahls (31) in eine Fokuszone (41) zur Ausbildung einer Primärintensitätszone (49; 59) zur Laserbearbeitung, und insbesondere zur Laserlötbearbeitung, und mindestens einer Sekundärintensitätszone (55, 57; 61, 63), die außerhalb der Primärintensitätszone angeordnet ist, und
Bewirken einer Relativbewegung zwischen den Intensitätszonen (49, 55, 57; 59, 61, 63) und dem zu bearbeitenden Werkstück (5) derart, dass der mindestens eine Sekundärintensitätsbereich (55, 57; 61, 63) seitlich zu einer Bewegungsrichtung (T) versetzt im Bereich des Randbereichs der Primärintensitätszone angeordnet ist und insbesondere eine vorbereitende oder nachbereitenden Laserbearbeitung des Randbereichs der Primärintensitätszone (49; 59) bewirkt.

## Claims

1. A diffractive optical beam-shaping element (33), in particular for use in an optical system (25), wherein the diffractive optical beam-shaping element (33) is configured for imposing a phase profile on a laser beam (31) provided for laser machining of a workpiece (5), comprising:
an areal-configured phase mask (43),
**characterised in that**
the areal-configured phase mask (43) has a primary beam region (P, P') with a primary beam diffuser phase profile and at least one secondary beam region with zones (S1, S2) distributed within the primary beam region (P, P') and forming a secondary beam generator phase profile,
wherein the primary beam diffuser phase profile comprises a random distribution of the phase and/or a diffractive phase profile, thereby causing beam diffusion in the direction of propagation of a laser beam (31), and
wherein the secondary beam generator phase profile has a diffraction grating type phase profile for diffracting a beam portion from the laser beam (31).

2. The diffractive optical beam-shaping element (33) of claim 1, wherein the primary beam diffuser phase profile in the primary beam region (P, P')
comprises a diffractive Fresnel lens-like phase profile, and/or
is configured to form a top hat beam profile.

3. The diffractive optical beam-shaping element (33) of claim 1 or 2, wherein the secondary beam-generating phase profile causes a beam diffusion along a corresponding secondary beam direction by the distribution and/or orientation of the zones (S1, S2), and/or
wherein the orientation of the secondary beam generator phase profile varies within a zone (S1, S2) or between zones (S1, S2).

4. The diffractive optical beam-shaping element (33) of any one of claims 1 to 3, wherein the secondary beam generator phase profile comprises linear phase grating sections, in particular blazed grating sections, and/or
wherein at least two secondary beam diffuser phase profiles are provided, the deflection directions of which run at an angle (α), in particular at an angle smaller than 90°, with respect to each other.

5. The diffractive optical beam-shaping element (33) of any one of claims 1 to 4, wherein the phase mask (43) has adjoining phase cells (45) with identical or in groups identical phase profiles, and/or
wherein at least a plurality of the phase cells (45) of a phase mask (43) comprises a primary beam region (P, P') and zones (S1, S2) of the secondary beam generator phase profile distributed over the primary beam region, and/or
wherein the beam-shaping element (33) is configured as a programmable or permanently inscribed diffractive optical element.

6. An optical system (25) for beam splitting of a laser beam (31) for providing a primary intensity zone (49; 59) and at least one secondary intensity zone (55, 57; 61, 63) for workpiece processing, comprising:
a diffractive optical beam-shaping element (33) according to any one of claims 1 to 5, which is configured to impose to the laser beam (31) a beam-shaping phase profile on a transverse input intensity profile (35), and
a near-field optical element (39) arranged for focusing the laser beam (31) in a focus zone (41), while forming the primary intensity zone (49; 59) and the at least one secondary intensity zone (55, 57; 61, 63) downstream of the beam-shaping element (33).

7. The optical system (25) of claim 6, further comprising:
a laser light in-coupling unit, in particular a light guide cable receiving unit (23), and/or
a collimating lens (27) for providing a beam section, in particular a collimated beam section, having the transverse input intensity profile (35), which impinges on the beam-shaping element (33), the collimating lens (27) being arranged in particular for collimating the light emerging from a light guide cable (17) positioned in the light guide cable receiving unit (23).

8. The optical system (25) of claim 6 or 7, further comprising:
a solder wire feed unit (12) for providing a solder wire (8) in the primary intensity zone (49; 59) and wherein the at least one secondary intensity zone (55, 57; 61, 63) is arranged in particular laterally to the connecting line from the solder wire end position to the primary intensity zone (49; 59) and in the region or outside the region of the periphery of the primary intensity zone (49; 59).

9. The optical system (25) of any one of claims 6 to 8, wherein the beam-shaping element (33) is arranged rotatably about a beam axis of the incident laser beam (31), in order to in particular align the position of the at least one secondary intensity zone (55, 57; 61, 63) with respect to the primary intensity zone (49; 59).

10. The optical system (25) of any one of the claims 6 to 9, further comprising:
a processing head unit (11) comprising the beam shaping element (33), in particular a deflection mirror (37), the focusing lens (39) and in particular the solder wire holding device (12), and
a beam delivery unit (21), which comprises in particular the light guide cable receiver unit (23) and the collimating lens (27),
wherein the processing head unit (11) is arranged rotatable relative to the beam delivery unit (21) about an axis of rotation extending substantially along the optical axis.

11. The optical system (25) of any one of claims 6 to 10, wherein the secondary beam generator is configured as a secondary beam diffuser, which causes a beam diffusion in the direction of diffraction.

12. A laser processing plant (3) for processing workpieces with a laser beam (31), comprising:
a laser beam source (15),
an optical system (25) of any one of claims 6 to 11, and
a workpiece holder (13), in particular for holding components (5A, 5B) to be soldered.

13. A method for providing intensity zones (49, 55, 57; 59, 61, 63) for laser-based workpiece processing by modifying the phase profile of a laser beam (31), **characterised by** the following steps:
imposing a primary phase profile onto a transverse intensity profile (35) of the laser beam (31), the primary phase profile comprising a random distribution of the phase and/or a diffractive phase profile such that the laser beam (31) forms a diffuse primary beam that propagates in particular along an optical axis of the laser beam (31), which is present in the case without modification of the phase profile; and
imposing a secondary phase profile over the transverse intensity profile (35) of the laser beam (31), wherein the secondary phase profile is distributed over the area of the primary phase profile in zones (S1, S2) and is configured such that a secondary portion of the laser beam (31) is deflected along a diffraction direction.

14. The method of claim 13, wherein the secondary portion of the laser beam (31) is diffusely deflected along a diffraction direction.

15. The method of claim 13 or 14, further comprising the steps:
focusing the primary beam and the secondary portion of the laser beam (31) into a focus zone (41) to form a primary intensity zone (49; 59) for laser processing, and in particular for laser soldering processing, and at least one secondary intensity zone (55, 57; 61, 63) arranged outside the primary intensity zone; and
causing a relative movement between the intensity zones (49, 55, 57; 59, 61, 63) and the workpiece (5) to be processed such that the at least one secondary intensity zone (55, 57; 61, 63) is arranged laterally offset with respect to a direction of movement (T) in the area of the border area of the primary intensity zone and in particular causes a preparatory or follow-up laser processing of the border area of the primary intensity zone (49; 59).

## Revendications

1. Élément optique diffractif de formation de faisceau (33), destiné à être utilisé en particulier dans un système optique (25), dans lequel l'élément optique diffractif de formation de faisceau (33) est conçu pour l'application d'une courbe de phase à un faisceau laser (31) destiné au traitement au laser d'une pièce usinée (5), comprenant
- un masque de phase conçu de manière plane (43), **caractérisé en ce que**
- le masque de phase conçu de manière plane (43) présente une région de faisceau primaire (P, P') avec une courbe de phase de diffuseur de faisceau primaire et au moins une région de faisceau secondaire avec des zones (S1, S2) formant une courbe de phase de générateur de faisceau secondaire, réparties sur la région de faisceau primaire (P, P'),
dans lequel la courbe de phase de diffuseur de faisceau primaire comporte un caractère aléatoire de la phase et/ou une courbe de phase diffractive, produisant ainsi une diffusion de faisceau dans la direction de propagation d'un faisceau laser (31), et dans lequel la courbe de phase de générateur de faisceau secondaire présente une courbe de phase de réseau de diffraction pour la diffraction d'une partie de faisceau à partir du faisceau laser (31).

2. Élément optique diffractif de formation de faisceau (33) selon la revendication 1, dans lequel la courbe de phase de diffuseur de faisceau primaire comporte une courbe de phase du genre lentille de Fresnel dans la région de faisceau primaire (P, P') et/ou est conçue pour former un profil de faisceau à sommet plat.

3. Élément optique diffractif de formation de faisceau (33) selon la revendication 1 ou 2, dans lequel la courbe de phase de générateur de faisceau secondaire produit une diffusion de faisceau le long d'une direction de faisceau secondaire correspondante par répartition et/ou orientation des zones (S1, S2) et/ou dans lequel l'orientation de la courbe de phase de générateur de faisceau secondaire varie à l'intérieur d'une zone (S1, S2) ou entre des zones (S1, S2).

4. Élément optique diffractif de formation de faisceau (33) selon l'une des revendications 1 à 3, dans lequel la courbe de phase de générateur de faisceau secondaire présente des sections de réseau de phase linéaires, en particulier des sections de réseau échelette, et/ou dans lequel il est prévu au moins deux courbes de phase de diffuseur de faisceau primaire, dont les directions de déflexion s'étendent sous un angle (α), en particulier sous un angle inférieur à 90°C les unes par rapport aux autres.

5. Élément optique diffractif de formation de faisceau (33) selon l'une des revendications 1 à 4, dans lequel le masque de phase (43) présente des cellules de phase (45) adjacentes les unes aux autres, avec des courbes de phase identiques ou identiques par groupes et/ou dans lequel une pluralité au moins des cellules de phase (45) d'un masque de phase (43) présentent une région de faisceau primaire (P, P') et des zones (S1, S2) de la courbe de phase de générateur de faisceau secondaire, réparties sur la région de faisceau primaire, et/ou dans lequel l'élément optique diffractif de formation de faisceau (33) est conçu comme un élément optique diffractif programmable ou inscrit fixement.

6. Système optique (25) pour la division de faisceau d'un faisceau laser (31) pour la mise à disposition d'une zone d'intensité primaire (49 ; 59) et d'au moins une zone d'intensité secondaire (55, 57 ; 61, 63) pour le traitement d'une pièce usinée, comprenant
- un élément optique diffractif de formation de faisceau (33) selon l'une des revendications 1 à 5, conçu pour appliquer une courbe de phase formant un faisceau sur un profil d'intensité initial transversal (35) au faisceau laser (31),
- une optique de champ proche (39) disposée en aval de l'élément de formation de faisceau (33) pour focaliser le faisceau laser (31) dans une zone focale (41) en formant la zone d'intensité primaire (49 ; 59) et l'au moins une zone d'intensité secondaire (55, 57 ; 61, 63) .

7. Système optique (25) selon la revendication 6, comprenant en outre
- une unité de couplage de lumière laser, en particulier une unité de logement de câble optique (23) et/ou
- une lentille de collimation (27) pour la mise à disposition d'un segment de faisceau en particulier collimaté avec le profil d'intensité initial transversal (35) atteignant l'élément de formation de faisceau (33), la lentille de collimation (27) étant agencée en particulier pour la collimation de la lumière sortant d'un câble optique (17) positionné dans le logement de câble optique (23).

8. Système optique (25) selon la revendication 6 ou 7, comprenant en outre
- une unité d'alimentation en fil à souder (12) pour la mise à disposition d'un fil à souder (8) dans la zone d'intensité primaire (49; 59), et dans lequel l'au moins une zone d'intensité secondaire (55, 57 ; 61, 63) est disposée en particulier sur le côté de la ligne de liaison entre la position d'extrémité de fil à souder et la zone d'intensité primaire (49 ; 59) et dans la région ou à l'extérieur de la région de la région de bord de la zone d'intensité primaire (49 ; 59).

9. Système optique (25) selon l'une des revendications 6 à 8, dans lequel l'élément de formation de faisceau (33) est agencé de manière à pouvoir tourner autour d'un axe de faisceau du faisceau laser (31) incident, pour orienter en particulier la position de l'au moins une zone d'intensité secondaire (55, 57 ; 61, 63) par rapport à la zone d'intensité primaire (49 ; 59).

10. Système optique (25) selon l'une des revendications 6 à 9, comprenant en outre
- une unité de tête de traitement (11), laquelle présente l'élément de formation de faisceau (33), en particulier un miroir de déviation (37), la lentille de focalisation (39) et en particulier le dispositif de maintien de fil à souder (12), et
- une unité de guidage de faisceau (21) comportant en particulier le logement de câble optique (23) et la lentille de collimation (27),
dans lequel l'unité de tête de traitement (11) est agencée de manière à pouvoir tourner par rapport à l'unité de guidage de faisceau (21), autour d'un axe de rotation s'étendant le long de l'axe optique.

11. Système optique (25) selon l'une des revendications 6 à 10, dans lequel le générateur de faisceau secondaire est conçu comme un diffuseur de faisceau secondaire produisant une diffusion de faisceau dans la direction de diffraction.

12. Installation de traitement au laser (3) pour le traitement de pièces usinées à l'aide d'un faisceau laser (31), comprenant
- une source de faisceau laser (15),
- un système optique (25) selon l'une des revendications 6 à 11, et
- un support de pièce usinée (13) en particulier pour le support de composants à souder (5A, 5B).

13. Procédé pour la mise à disposition de zones d'intensité (49, 55, 57 ; 59, 61, 63) pour le traitement au laser de pièces usinées par modification de la courbe de phase d'un faisceau laser (31), **caractérisé par** les étapes suivantes :
- application d'une courbe de phase primaire sur un profil d'intensité transversal (35) du faisceau laser (31), la courbe de phase primaire comportant un caractère aléatoire de la phase et/ou une courbe de phase diffractive, de telle façon que le faisceau laser (31) forme un faisceau primaire diffus, se propageant en particulier le long d'un axe optique du faisceau laser (31), lequel est présent dans le cas sans modification de la courbe de phase, et
- application d'une courbe de phase secondaire sur le profil d'intensité transversal (35) du faisceau laser (31), la courbe de phase secondaire étant divisée en zones (S1, S2) sur la région de la courbe de phase primaire et conçue de telle façon qu'une partie secondaire du faisceau laser (31) est déviée le long d'une direction de diffraction.

14. Procédé selon la revendication 13, dans lequel la partie secondaire du faisceau laser (31) est déviée de manière diffuse le long d'une direction de diffraction.

15. Procédé selon la revendication 13 ou 14, comprenant en outre les étapes suivantes
- focalisation du faisceau primaire et de la partie secondaire du faisceau laser (31) dans une zone focale (41) pour former une zone d'intensité primaire (49 ; 59) pour le traitement au laser, et en particulier pour le traitement par soudage au laser, et au moins une zone d'intensité secondaire (55, 57 ; 61, 63) disposée à l'extérieur de la zone d'intensité primaire, et
- réalisation d'un déplacement relatif entre les zones d'intensité (49, 55, 57 ; 59, 61, 63) et la pièce usinée (5) à traiter, de telle façon que l'au moins une région d'intensité secondaire (55, 57 ; 61, 63) est disposée de façon décalée latéralement par rapport à une direction de déplacement (T) dans la région de la région de bord de la zone d'intensité primaire et permet de réaliser en particulier un pré-traitement ou un post-traitement au laser de la région de bord de la zone d'intensité primaire (49; 59).
